# EUROPÄISCHE PATENTSCHRIFT

(11) **EP 1 921 961 B1**
(45) Veröffentlichungstag und Bekanntmachung des Hinweises auf die Patenterteilung: **04.03.2009**
(21) Anmeldenummer: 06792838.2
(22) Anmeldetag: 16.08.2006
(51) Int. Cl.: A47J 43/08

(54) **ELEKTROMOTORISCHES KÜCHENGERÄT MIT EINEM BAJONETTVERSCHLUSS FÜR EINEN ELEKTROMOTOR UND EINE GETRIEBESTUFE UND VERFAHREN ZUM MONTIEREN EINES ELEKTROMOTORISCHEN KÜCHENGERÄTS**
ELECTRIC MOTOR-DRIVEN KITCHEN APPLIANCE PROVIDED WITH A BAYONET LOCK FOR AN ELECTRIC MOTOR AND A GEAR STAGE AND METHOD FOR ASSEMBLING SAID ELECTRIC MOTOR-DRIVEN KITCHEN APPLIANCE
APPAREIL DE CUISINE A MOTEUR ELECTRIQUE POURVU D'UN JOINT A BAIONNETTE POUR UN MOTEUR ELECTRIQUE ET UN ETAGE D'ENGRENAGE, ET PROCEDE POUR MONTER UN APPAREIL DE CUISINE A MOTEUR ELECTRIQUE

(30) Priorität: 26.08.2005 DE 102005040547
(43) Veröffentlichungstag der Anmeldung: 21.05.2008
(73) Patentinhaber: BSH Bosch und Siemens Hausgeräte GmbH, 81739 München (DE)
(72) Erfinder: KOVACIC, Peter, 3303 Gomilsko (SI); PESEC, Jurij, 3301 Petrovce (SI)
(86) Internationale Anmeldenummer: PCT/EP2006/065357
(87) Internationale Veröffentlichungsnummer: WO 2007/023122

(56) Entgegenhaltungen:
- DE-A1- 2 551 842
- DE-C- 457 134

## Beschreibung

Die Erfindung betrifft ein elektromotorisches Küchengerät, insbesondere eine elektromotorische Solo- oder Universalküchenmaschine, mit einem Elektromotor und einer Getriebestufe, wobei der Elektromotor ein Motorgehäuse aufweist und die Getriebestufe ein Getriebegehäuse aufweist; sowie einen Elektromotor und eine Getriebestufe für das Küchengerät und ein Verfahren zum Montieren eines elektromotorischen Küchengeräts, insbesondere elektromotorische Solo- oder Universalküchenmaschine.

DE 25 51 842 beschreibt ein elektromotorisch betriebenes Antriebsaggregat für Küchenmaschinen mit einem eine Kegelradverzahnung aufweisenden Planetengetriebe, dessen Planetenrad in einer geneigten Achse umläuft und mit seiner Achse die Achse des Zentralrades schneidet, wobei mit Hilfe des Planetengetriebes eine Taumelbewegung des angetriebenen Werkzeugs um das Zentralrad bewirkt wird.

Die Herstellung von bekannten Küchengeräten sieht in der Regel vor, dass sowohl ein Elektromotor als auch eine Getriebestufe in ein Gerätegehäuse der Küchenmaschine eingesetzt werden müssen, um dort miteinander in Eingriff zu gelangen, wobei ein Testen bzw. Spezifizieren des Küchengeräts erst im vollständig zusammengebauten Zustand des Küchengeräts möglich ist. Die Montage bzw. Herstellung der bekannten Küchengeräte ist somit vergleichsweise aufwendig.

Es ist Aufgabe der vorliegenden Erfindung, ein elektromotorisches Küchengerät, einen Elektromotor bzw. eine Getriebestufe für das Küchengerät sowie ein Verfahren zum Montieren eines elektromotorischen Küchengeräts bereitzustellen, womit eine einfache und preisgünstige Montage bzw. Herstellung eines Küchengeräts ermöglicht wird.

Diese Aufgabe wird erfindungsgemäß durch das elektromotorische Küchengerät, durch den Elektromotor bzw. die Getriebestufe für das Küchengerät sowie durch das Verfahren zum Vormontieren eines elektromotorischen Küchengeräts, wie in den unabhängigen Ansprüchen angegeben, gelöst. Weitere vorteilhafte Ausgestaltungen und Weiterbildungen, die jeweils einzeln angewandt oder beliebig miteinander kombiniert werden können, sind Gegenstand der jeweilig abhängigen Ansprüche.

Das erfindungsgemäße elektromotorische Küchengerät, insbesondere die elektromotorische Solo- oder Universalküchenmaschine, mit einem Elektromotor und einer Getriebestufe, wobei der Elektromotor ein Motorgehäuse und die Getriebestufe ein Getriebegehäuse aufweist, sieht vor, dass das Motorgehäuse und das Getriebegehäuse mit Hilfe eines Bajonettverschlusses miteinander verbunden sind.

Die Montage des Elektromotors, der Getriebestufe als auch der Elektromotor-Getriebestufen-Anordnung kann separat mit einer eigenen Montagelinie erfolgen. Hierdurch wird eine einfache Montage des Endproduktes ermöglicht. Außerdem ist eine Qualitätskontrolle des Antriebs vor einem Einbau ins Gerätegehäuse der Küchenmaschine möglich. Mit Hilfe des Bajonettverschlusses kann der Elektromotor auf einfache Weise mit der Getriebestufe verbunden werden, wofür nur wenige Handgriffe erforderlich sind. Der Bajonettverschluss sorgt auch dafür, dass der Elektromotor korrekt zur Getriebestufe ausgerichtet ist.

Die Getriebestufe schließt sich insbesondere unmittelbar an den Elektromotor an, d.h. sie kann insbesondere direkt und unmittelbar mit der Motorwelle verbunden sein. Unter Elektromotor wird insbesondere der Motor ohne zusätzliche Getriebeeinrichtungen verstanden.

Als Bajonettverschluss bezeichnet man in der Regel eine Vorrichtung zum leicht lösbaren Verbinden zweier Teile in der Richtung ihrer Längsachse, wobei der eine Teil, welcher über den anderen geschoben wird, einen Längsschlitz besitzt, an dessen Ende sich im wesentlichen rechtwinkelig bzw. leicht schräg, ein kurzer Querschlitz ansetzt, und der andere Teil dagegen einen Vorsprung aufweist, der in den Querschlitz eingeführt wird und dann die feste Verbindung bewirkt. Bei einem Bajonettverschluss erfolgt die Verbindung in der Regel über eine Streck-Dreh-Bewegung: Die beiden zu verbindenden Teile werden ineinander gesetzt; annähernd senkrecht zur ihrer Streckrichtung sind in beiden Teilen an der Verbindungsstelle längliche Erhebung angebracht. Diese laufen jedoch nicht rundum, sondern sind unterbrochen (sonst wäre das Ineinanderstecken nicht möglich). Da die Erhebung leicht schräg in der Ebene senkrecht zur Streckrichtung liegen, werden durch eine Drehbewegung beide Teile gegeneinander gepresst. Der Bajonettverschluss arbeitet dann wie ein Gewinde. Manchmal kann zur Sicherung der Verbindung zusätzlich eine Raste verwendet werden. Alternativ zum Verfahren der ineinander greifenden Schienen kann auch eine entsprechend geformte Einbuchtung an einem und eine Ausbuchtung am anderen Teil verwendet werden.

Der Bajonettverschluss ermöglicht somit eine einfache jedoch feste Verbindung zwischen dem Elektromotor und der Getriebestufe. Der Bajonettverschluss ist insbesondere als Schnellsteckverbindung ausgestaltet.

Das Motorgehäuse kann aus glasfaser- oder carbonfaserverstärktem Kunststoff oder Spritzguss sein. Das Getriebegehäuse kann aus glasfaser- oder carbonfaserverstärktem Kunststoff oder Spritzguss sein.

Der Bajonettverschluss weist insbesondere einen Verschlusswinkel von weniger als 180°, insbesondere weniger als 90°, vorzugsweise von weniger als 45°, auf.

Vorteilhafterweise weist der Elektromotor eine einzige Drehrichtung auf, die in Schließrichtung des Bajonettverschlusses wirkt und ein Selbst-Festziehen des Bajonettverschlusses im Betrieb bewirkt. Der Elektromotor ist hierbei entweder nur rechtsdrehend oder nur linksdrehend. Durch die Drehung der Motorwelle wird die Getriebestufe gegen den Elektromotor gezogen. Das Getriebegehäuse wird hierbei mit dem Motorgehäuse fest verbunden.

Vorteilhafterweise wird eine drehfeste Verbindung einer Motorwelle des Elektromotors mit einer Getriebewelle der Getriebestufe mit Hilfe eines Schneckengetriebes hergestellt. Mit Hilfe eines Schneckengetriebes ist es möglich, mit einfachen Mitteln eine schnelle Verbindung des Elektromotors mit der Getriebestufe herzustellen. Dabei kann eine Getriebeschnecke, die auf einer Motorwelle des Elektromotors befestigt ist, in das Innere der Getriebestufe eingreifen und dort mit einem Schneckenrad in Verbindung gelangen.

Das Schneckengetriebe umfasst vorteilhafterweise eine motorseitige Getriebeschnecke und mindestens ein getriebeseitiges Schneckenrad, vorzugsweise zwei zur Getriebeschnecke gegenüberliegende, getriebeseitige Schneckenräder. Zwar ist für die Übertragung eines Drehmoments lediglich ein Schneckenrad erforderlich, jedoch kann durch ein in Bezug auf die Getriebeschnecke gegenüber liegendes Schneckengegenrad eine Scher- oder Gegenkraft aufgenommen werden, so dass die Getriebeschnecke nicht aus dem Schneckenrad unter Last ausbricht. Hierdurch wird ein Verschleiß des Schneckengetriebes verringert.

Vorteilhafterweise werden das Motorgehäuse und das Getriebegehäuse zusätzlich durch einen Verstärkungsrahmen miteinander fixiert. Dabei kann der Verstärkungsrahmen über das Motorgehäuse bzw. das Getriebegehäuse gestreift werden, so dass eine besonders torsionssteife Verbindung zwischen dem Motorgehäuse und dem Getriebegehäuse hergestellt wird.

Der Bajonettverschluss weist insbesondere eine Verschlussdrehachse auf, die im Wesentlichen mit einer Motordrehachse zusammenfällt. Hierdurch können insbesondere Motordrehmomente ausgenützt werden, um den Bajonettverschluss fester anzuziehen.

Das Küchengerät weist vorteilhafterweise ein Gerätegehäuse auf, in welches der mit der Getriebestufe verbundene Elektromotor einsetzbar ist. Durch den Bajonettverschluss wird eine Vormontage der Getriebestufe mit dem Elektromotor ermöglicht bzw. erleichtert, die ein Testen bzw. Spezifizieren bzw. eine Qualitätskontrolle vor Einbau in ein Gerätegehäuse des Küchengeräts erlaubt. Insbesondere mit Hilfe einer Geräuschmessung kann festgestellt werden, ob die so erhältliche vormontierte Elektromotor-Getriebestufen-Anordnung einwandfrei funktioniert.

Der erfindungsgemäße Elektromotor weist ein erstes Bajonettverschlussteil auf und ist geeignet und bestimmt für das erfindungsgemäße Küchengerät.

Die erfindungsgemäße Getriebestufe weist ein zweites Bajonettverschlussteil auf und ist geeignet und bestimmt für ein erfindungsgemäßes Küchengerät. Sowohl der Elektromotor als auch die Getriebestufe und die Elektromotor-Getriebestufen-Anordnung können separat gefertigt werden und können somit modular in den Herstellungsprozess des Küchengeräts einbezogen werden. Dieses reduziert in erheblicher Weise die Komplexität der Herstellung und somit auch die Kosten.

Das erfindungsgemäße Verfahren zum Montieren eines elektromotorischen Küchengeräts, insbesondere eines erfindungsgemäßen Küchengeräts, mit einem Elektromotor und einer Getriebestufe, wobei der Elektromotor ein Motorgehäuse und die Getriebestufe ein Getriebegehäuse aufweist, sieht folgende Verfahrensschritte vor: Vormontieren des Elektromotors in dem Motorgehäuse, Vormontieren der Getriebestufe in dem Getriebegehäuse, Verbinden des Motorgehäuses und des Getriebegehäuses mit Hilfe eines Bajonettverschlusses derart, dass eine Motorwelle des Elektromotors mit einer Getriebewelle drehfest verbunden werden.

Mit Hilfe des erfindungsgemäßen Verfahrens ist eine besonders einfache, zuverlässige und preisgünstige Montage bzw. Herstellung eines elektromotorischen Küchengeräts möglich. Durch die Definition Bajonettschlusses wird zudem das Küchengerät modulartig aufgebaut, welches eine Produktflexibilität fördert. Vorteilhafterweise erfolgt die Dreh-Streckbewegung des Verschließens des Bajonettverschlusses im Wesentlichen um die Motorwelle. Insbesondere bevorzugt ist hierbei, dass die Drehbewegung in Richtung der Drehrichtung der Motorwelle im Betrieb erfolgt.

Weitere vorteilhafte Einzelheiten und Ausgestaltungen, die jeweils einzeln angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
Fig. 1 ein erfindungsgemäßes Küchengerät in einer perspektivischen Schrägansicht seitlich von oben;
Fig. 2 eine Elektromotor-Getriebestufen-Anordnung des erfindungsgemäßen Küchengeräts in einer perspektivischen Schrägansicht beim Verbinden des Elektromotors mit einer Getriebestufe;
Fig. 3 die Elektromotor-Getriebestufen-Anordnung nach Fig. 2 nach vollendeter Vormontage;
Fig. 4 die Elektromotor-Getriebestufen-Anordnung nach den Figuren 2 und 3 vor einem Zusammenbau des Elektromotors mit der Getriebestufe;
Fig. 5 eine weitere Elektromotor-Getriebestufen-Anordnung für ein erfindungsgemäßes Küchengerät vor der Vormontage des Elektromotors mit der Getriebestufe;
Fig. 6 eine Elektromotor-Getriebestufen-Anordnung nach Figuren 2 bis 5 mit Verstärkungsrahmen;
Fig. 7 den Verstärkungsrahmen nach Fig. 6;
Fig. 8 einen Längsschnitt durch die Elektromotor-Getriebestufen-Anordnung nach einer der Figuren 2 bis 6 mit einer vertikalen Schnittebene;
Fig. 9 einen Längsschnitt der Elektromotor-Getriebestufen-Anordnung nach einer der Figuren 2 bis 6 oder 8 in einem Längsschnitt mit einer waagerechten Schnittebene;
Fig. 10 eine weitere Ausführungsform einer Elektromotor-Getriebestufen-Anordnung des erfindungsgemäßen Küchengeräts im Längsschnitt mit einer vertikalen Schnittebene;
Fig. 11 einen senkrecht zur Motorendrehachse verlaufender Querschnitt durch eine Getriebestufe eines erfindungsgemäßen Küchengeräts;
Fig. 12 eine schematische Draufsicht einer Getriebestufenanordnung eines erfindungsgemäßen Küchengeräts;
Fig. 13 einen Längsschnitt durch eine Elektromotor-Getriebestufen-Anordnung eines erfindungsgemäßen Küchengeräts mit einer vertikalen Schnittebene.

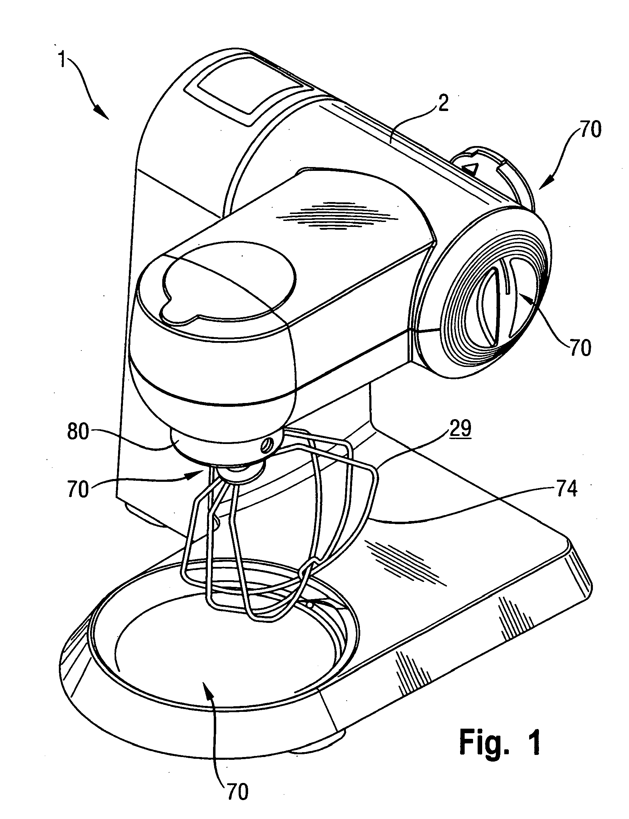

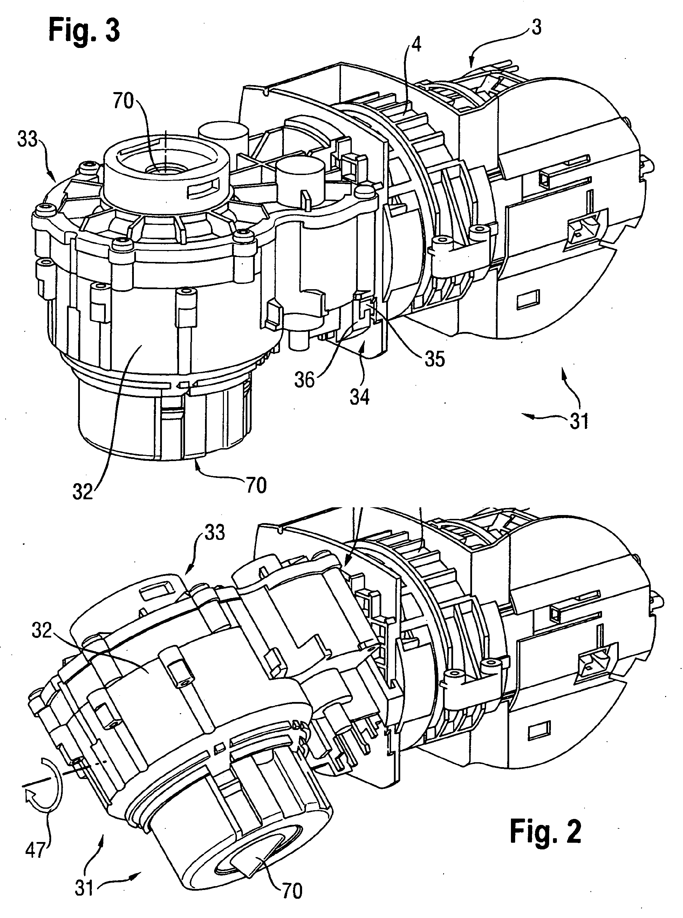

Fig. 1 zeigt ein erfindungsgemäßes Küchengerät 1 in einer perspektivischen Schrägansicht seitlich von oben mit einem Gerätegehäuse 2 und vier verschiedenen Aufnahmen 70 für ein Werkzeug 29, welches als Rührbesen 74 ausgestaltet sein kann. Hierbei sind drei der vier Aufnahmen 70 mit dem Elektromotor 3 (siehe Fig. 2 bis 6) antreibbar.

Fig. 2 zeigt eine Elektromotor-Getriebestufen-Anordnung 31 des erfindungsgemäßen Küchengeräts 1 während einer Vormontage in einer perspektivischen Schrägansicht, wobei eine Getriebestufe 33 mit dem Elektromotor 3 verbunden wird, indem ein Getriebegehäuse 32 und ein Motorgehäuse 4 miteinander mit einem Bajonettverschluss 34 verbunden werden, indem das Getriebegehäuse 32 um einen Winkel verdreht auf das Motorgehäuse 4 aufgesetzt wird und durch Drehung entlang einer Drehrichtung 47 fixiert wird. Mit Hilfe des Bajonettverschlusses 34 ist eine mittels einer Dreh-Streckbewegung bewirkte, einfache aber zuverlässige Verbindung der Getriebestufe 33 mit dem Elektromotor 3 möglich.

Fig. 3 zeigt die Elektromotor-Getriebestufen-Anordnung 31 nach Fig. 2 in perspektivischer Ansicht, wobei die Getriebestufe 33 mit dem Bajonettverschluss 34 an dem Elektromotor 3 befestigt ist, indem ein erstes Bajonettverschlussteil 35 an dem Elektromotor 3 in ein entsprechend komplementär ausgestaltetes zweites Bajonettverschlussteil an der Getriebestufe 33 in Eingriff gelangt.

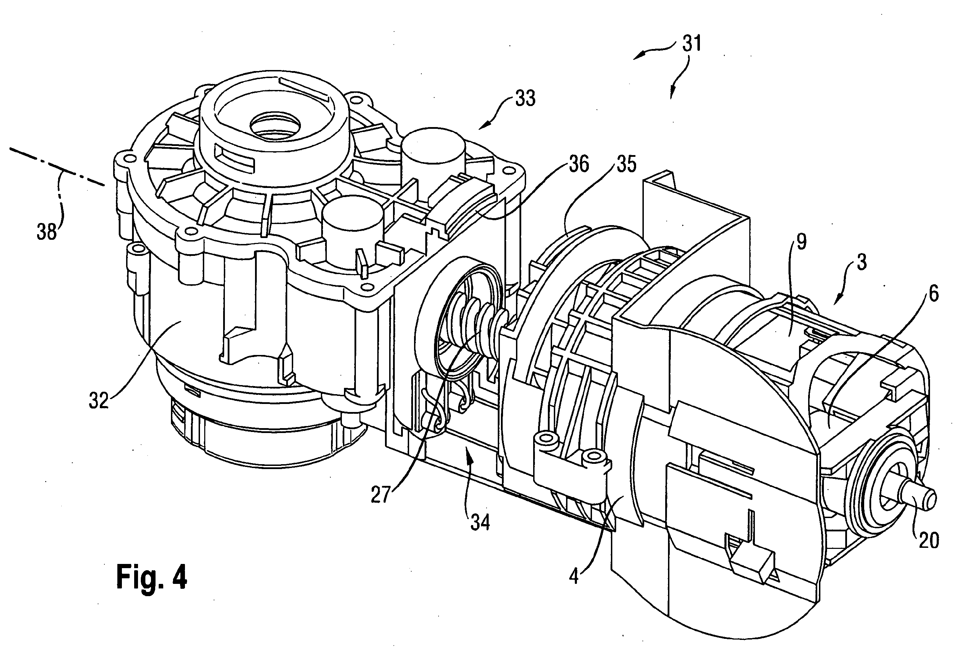

Fig. 4 zeigt eine weitere Elektromotor-Getriebestufen-Anordnung 31 des erfindungsgemäßen Küchengeräts 1 im Zustand unmittelbar vor der Vormontage in einer perspektivischen Schrägansicht, wobei der Elektromotor 3 und die Getriebestufe 33 entlang einer Verbindungslinie 38 zusammengeschoben werden, während eine Getriebeschnecke 27 des Elektromotors 3 in das Innere der Getriebestufe 33 eindringt, wobei durch Drehung der Getriebestufe 33 relativ zum Elektromotor um die Verbindungslinie 38 das erste Bajonettverschlussteil 35 am Elektromotor 3 in das zweite Bajonettverschlussteil 36 an der Getriebestufe 33 eingreift.

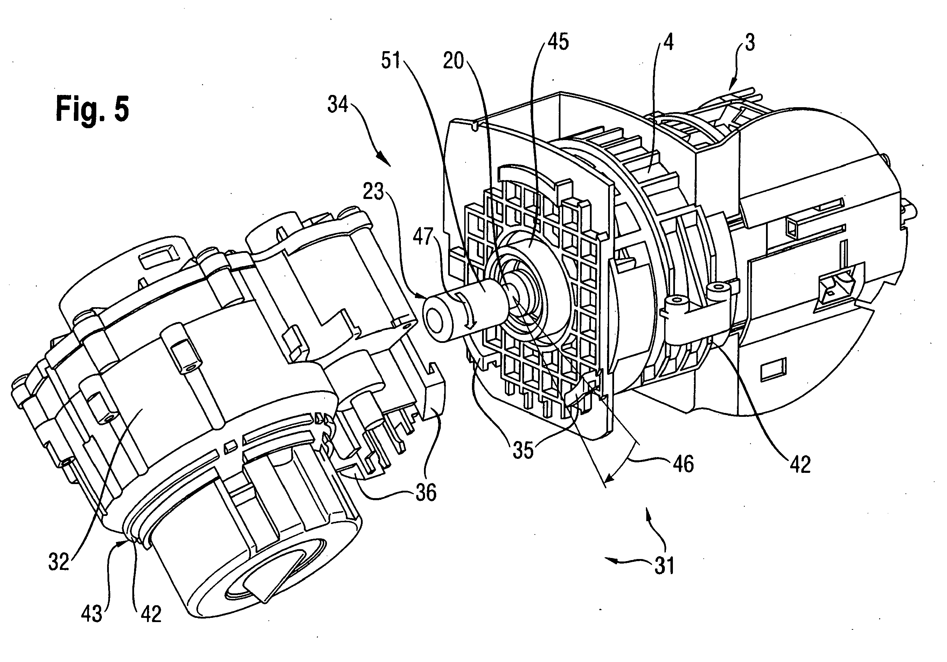

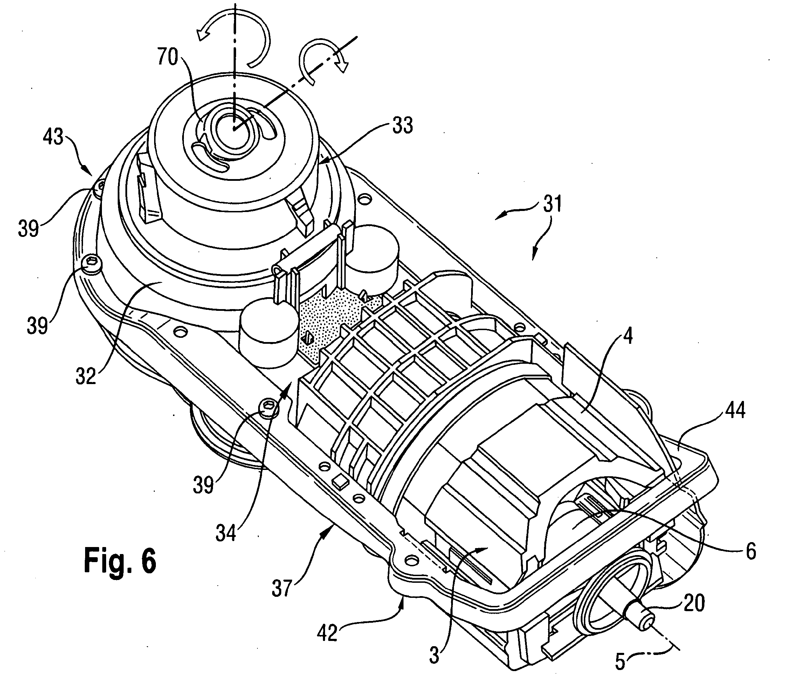

Fig. 5 zeigt eine Elektromotor-Getriebestufen-Anordnung 31 des erfindungsgemäßen Küchengeräts 1 bevor sie zusammengesetzt wird. Zum Verschließen des Bajonettverschlusses 34 wird das Getriebegehäuse 32 relativ zum Motorgehäuse 4 um einen Verschlusswinkel 46 von 30° gedreht, damit die am Motorgehäuse 4 befindlichen ersten Bajonettverschlussteile 35 in Eingriff mit den am Getriebegehäuse 32 befindlichen zweiten Bajonettverschlussteilen 36 gelangen. Auf einer Motorwelle 20 sitzt ein als erstes Stirnschraubrad 51 ausgestaltetes Getriebeelement 23, welches sich im Betrieb des Elektromotors 3 entlang der Drehrichtung 47 dreht, so dass die Drehung der Motorwelle 20 den Bajonettverschluss 34 im Betrieb fixiert. Das Getriebegehäuse 32 bzw. das Motorgehäuse 4 weist Verbindungsgegenelemente 42 auf, die als Verbindungsaufnahmen 43 ausgestaltet sind, um einen Verstärkungsrahmen 37 (siehe Fig. 6) mit entsprechenden Verbindungsvorsprüngen 41 aufzunehmen. Mit Hilfe des Verstärkungsrahmens 37 wird das Getriebegehäuse 32 zusätzlich gegenüber dem Motorgehäuse 4 stabilisiert.

Fig. 6 zeigt die Elektromotor-Getriebestufen-Anordnung 31 nach Fig. 5 im vormontierten Zustand in perspektivischer Schrägansicht, wobei der Verstärkungsrahmen 37 die Getriebestufe 33 und den Elektromotor 3 zusätzlich gegen eine Torsion relativ zueinander verstärkt. Der Verstärkungsrahmen 37 wird mit Hilfe von Schrauben 39 an dem Motorgehäuse 4 bzw. dem Getriebegehäuse 32 verschraubt. Hierzu ist der Verstärkungsrahmen 37, der eine L-Form aufweist, mit Hilfe von Verbindungsaufnahmen 43 am Motorgehäuse 4 bzw. am Getriebegehäuse 32 fixiert. Der Verstärkungsrahmen 37 ist als L-Profil ausgestaltet. Die Drehung der Motorachse 20 des Elektromotors 3 um die Motordrehachse 5 wirkt in Schließrichtung des Bajonettverschlusses 34, so dass sich die Getriebestufe 33 auch unter starker Last nicht von dem Elektromotor 3 lösen kann. Die Getriebestufe 33 weist eine Aufnahme 70 auf, die ein Werkzeug 29 wie z.B. einen Rührbesen 74 aufnehmen kann.

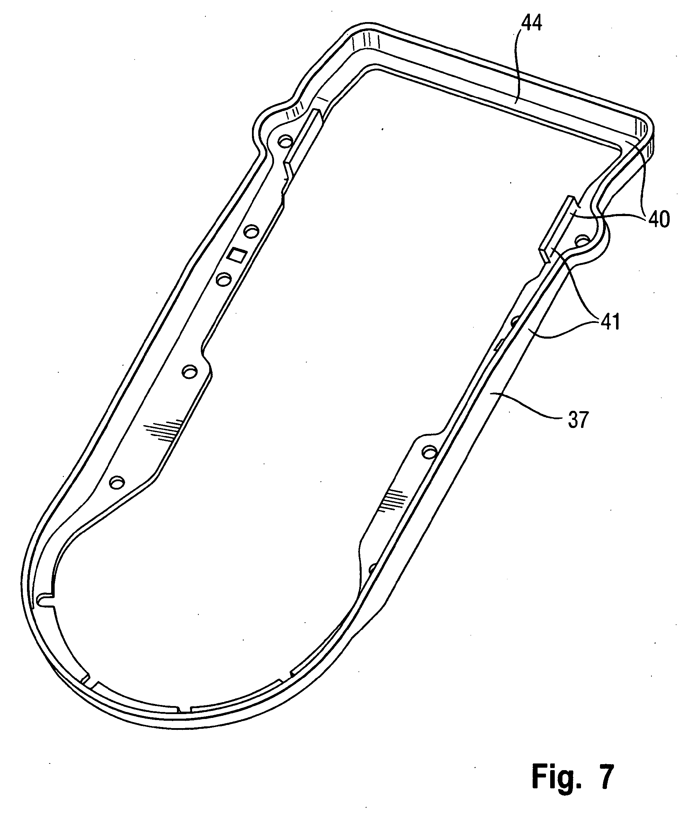

Fig. 7 zeigt den Verstärkungsrahmen 37 nach Fig. 6 in einer perspektivischen Schrägansicht. Der Verstärkungsrahmen 37 ist als L-Profil 44 mit entsprechenden Verbindungselementen 40 sowie Verbindungsvorsprüngen 41 ausgestaltet, damit er an dem Getriebegehäuse 32 bzw. dem Motorgehäuse 4 befestigt werden kann, wozu nur wenige Schrauben 39 erforderlich sind. Mit Hilfe des Verstärkungsrahmens können Drehmomente des Elektromotors 3 von etwa 20 Nm aufgenommen werden. Hierdurch wird eine besonders steife Konstruktion realisiert, die eine Vormontage der Elektromotor-Getriebestufen-Anordnung 31 ermöglicht, so dass ein Testen und Spezifizieren der Elektromotor-Getriebestufen-Anordnung 31 vor einem Einbau in ein Gerätgehäuse 2 des Küchengeräts 1 erfolgen kann.

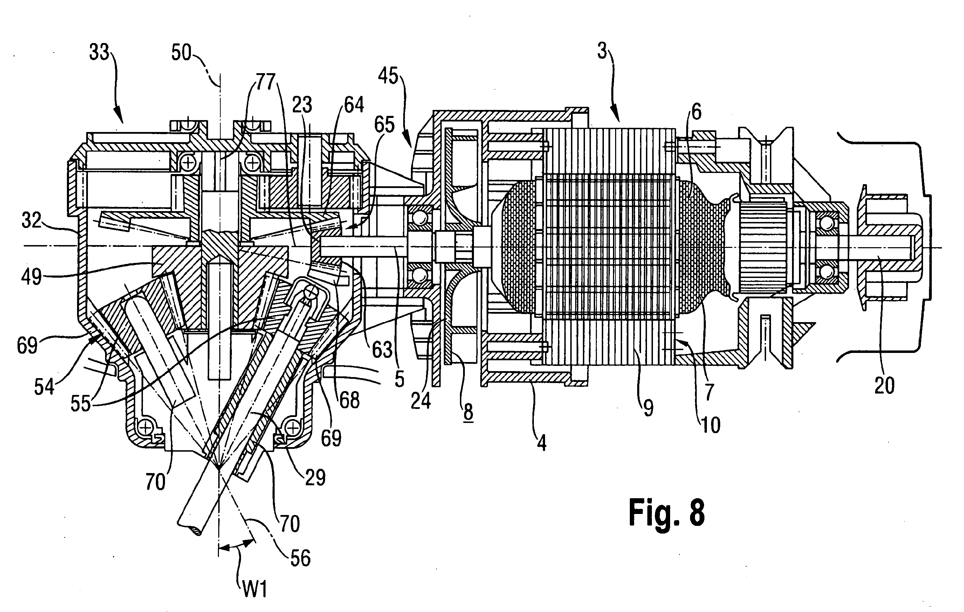

Fig. 8 zeigt einen Längsschnitt durch eine Elektromotor-Getriebestufen-Anordnung 31 mit einer vertikalen Schnittebene. Der Elektromotor 3 umfasst das Motorgehäuse 4, in dem ein Stator 9 mit entsprechenden Statorwicklungen 10 und einem darin beweglichen Rotor 6 mit entsprechenden Rotorwicklungen 7 angeordnet sind. Auf der Motorwelle 20 sitzt ein Kühlrad 24, welches als Lüfterrad 8 ausgestaltet ist. Durch die Dimensionierung des Kühlrads 24, insbesondere die Stärke des verwendeten Materials sowie die thermischen Eigenschaften des verwendeten Materials kann auch an den Rotorwicklungen 7 bzw. in der Getriebestufe 33 entwickelte Wärme durch Wärmeleitung abgeführt werden. An der Motorwelle 20 ist ein Getriebeelement 23 drehfest verbunden, welches als erstes Kegelrad 23 zusammen mit einem zweiten Kegelrad 64 der Getriebestufe 33 ein Kegelradgetriebe 65 bildet. Mit Hilfe des zweiten Kegelrads 64 wird ein Sonnenrad 49 eines Planetengetriebes 54 in Drehung versetzt, welches seinerseits in Eingriff mit drei Planetenrädern 55 steht, die ihrerseits auf einem Hohlrad 49 ablaufen. Durch die Drehung der Motorwelle 20 werden sowohl die Planetenräder 55 um ihre jeweiligen Planetenradachsen 56 als auch um eine Sonnenradachse 50 gedreht, so dass ein in eine Aufnahme 70 des Planetenrads 55 gestecktes Werkzeug 29 eine Drehbewegung auf einem Kegel durchführt. Die Sonnenradachse 50 steht senkrecht zur Motorendrehachse 5. Die Getriebewellen 77 des Kegelradgetriebes 65 stehen im Wesentlichen senkrecht aufeinander. Dabei liegt die Motordrehachse 5 im Wesentlichen koplanar in einer Ebene mit der Sonnenradachse 50. Der durch die Planetenradachse 56 und die Sonnenradachse 50 definierte Winkel W1 beträgt in etwa 30°.

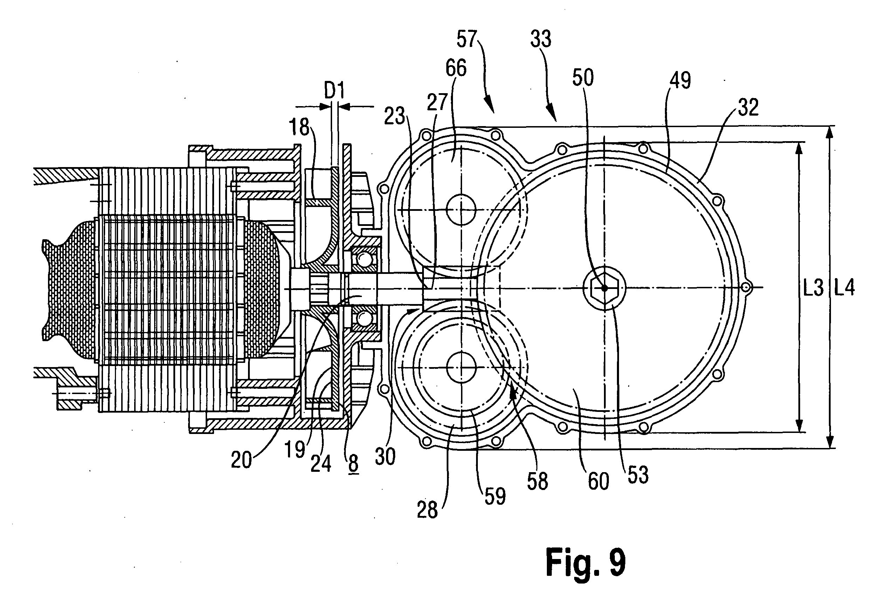

Fig. 9 zeigt eine Elektromotor-Getriebestufen-Anordnung 31 des erfindungsgemäßen Küchengeräts 1 in einem Längsschnitt mit einer waagerechten Schnittebene und zeigt eine Getriebestufe 33, die ein Schneckengetriebe 30 und ein Stirnradgetriebe 58 aufweist. Auf der Motorwelle 9 ist eine Getriebeschnecke 27 drehfest befestigt, welche mit einem Schneckenrad 28 in Eingriff gelangt, das in drehfester Verbindung mit einem ersten Stirnrad 59 steht. Gegenüberliegend zu dem Schneckenrad in Bezug auf die Getriebeschnecke 27 ist ein Gegenrad 66 angeordnet, welches in Eingriff mit der Getriebeschnecke 27 steht und Gegenkräfte aufnimmt. Das erste Stirnrad 59 steht in Eingriff mit einem zweiten Stirnrad 60, welches über eine Sonnenradwelle 53 mit dem Sonnenrad 49 in drehfester Verbindung steht. Während das Schneckengetriebe ein Übersetzungsverhältnis von im Wesentlichen 1:1 aufweist, wird mit dem Stirnradgetriebe 58 eine Untersetzung von 4:1 erzielt. Die Länge L3 beträgt zwischen 80 und 100 mm. Die Länge L4 beträgt zwischen 90 und 120 mm. Mit Hilfe des Kühlrads 6 kann an der Getriebeschnecke 27 erzeugte Wärme durch Wärmeleitung geführt werden, indem die erzeugte Wärme im Inneren der Motorwelle 20 an das Kühlrad 24 abgegeben wird. Das Kühlrad weist einen breiten Sitz und eine große Dicke D1 auf, um Wärmeübergangswiderstände und Wärmeleitungswiderstände möglichst gering zu halten. Hierdurch wird eine zusätzliche Kühlung des Schneckengetriebes 30 überflüssig. Das Kühlrad 24 weist darüber hinaus Ventilatorflügel 18 auf, die die Kühlung unterstützen.

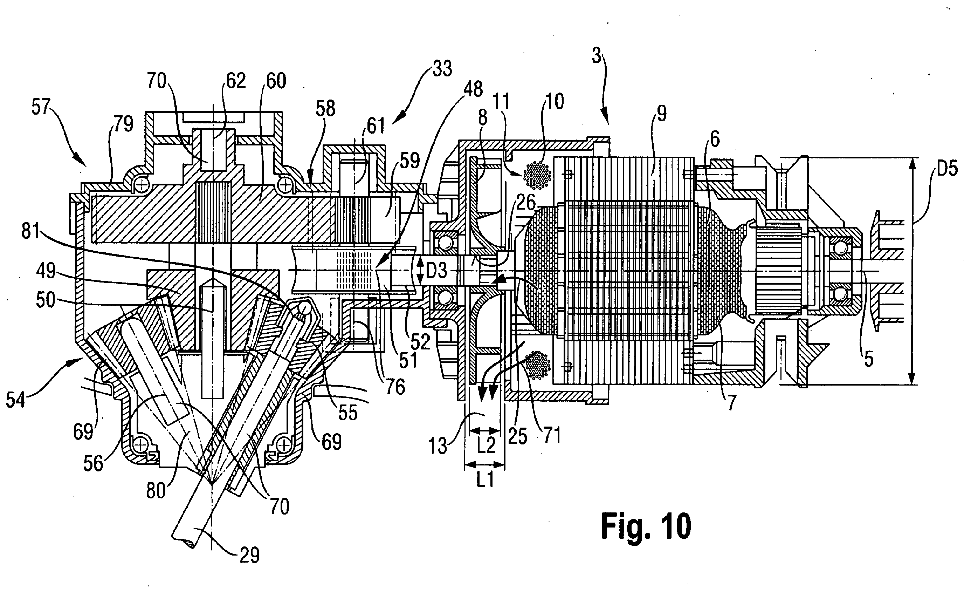

Fig. 10 zeigt eine Elektromotor-Getriebestufen-Anordnung 31 des erfindungsgemäßen Küchengeräts mit einem Stirnradgetriebe 58 und einem Stirnschraubradgetriebe 48 als Getriebestufe 33, wobei das Stirnschraubradgetriebe 48 ein erstes Stirnschraubrad 51, welches auf der Motorwelle 20 befestigt ist, und ein zweites Stirnschraubrad 52 aufweist, welches drehfest mit einem ersten Stirnrad 59 verbunden ist. Das erste Stirnrad 59 steht in Eingriff mit einem zweiten Stirnrad 60, welches auf einer zweiten Stirnradwelle 62 befestigt ist und mit dem Sonnenrad 49 drehfest verbunden ist. Die zweite Stirnradwelle 62 ist im Wesentlichen parallel zu einer ersten Stirnradwelle 61 des ersten Stirnrads 59. Die zweite Stirnradwelle 62 weist eine Aufnahme 70 für ein Werkzeug 29 auf. Um dieses Werkzeug in die Aufnahme 70 einzuführen, muss ein Gehäusedeckel 79 angehoben werden. Das Stirnradgetriebe 58 und das Stirnschraubradgetriebe 48 bilden eine drehungsübertragende Verbindung für das Planetengetriebe 54, welches das Sonnenrad 49, drei Planetenräder 55 und ein Hohlrad 69 aufweist. Das Sonnenrad 49, die Planetenräder 55 und das Hohlrad 69 sind kegelförmig, so dass bei einer Drehung der Motorwelle 20 ein Werkzeug 29, welches in eine Aufnahme 70 der Planetenräder 55 eingesetzt ist, um eine Planetenradachse 56 dreht, die ihrerseits auf einem Kegel um eine Sonnenradachse 50 rotiert. Aufgrund der Kegelform des Sonnenrads 49 der Planetenräder 55 und des Hohlrads 69 führt das Werkzeug 29 eine Taumelbewegung durch, wobei die Taumelbewegung auf einem Kegel mit einem Öffnungswinkel von ungefähr 60 ° verläuft. Das Werkzeug 29 kann in die Aufnahme 70 eines Planetenrads 55 gesteckt und mit Hilfe einer Werkzeugarretierung 81 arretiert werden. Das Stirnschraubradgetriebe 48 weist im Wesentlichen senkrecht zueinander stehende Getriebewellen 76 auf. Der Elektromotor 3 weist einen Rotor 6 auf, der Rotorwicklungen 7 trägt, die von der durch das Lüfterrad 8 erzeugten Kühlluft 71 gekühlt werden. Ein Stator 9 des Elektromotors 3 weist Statorwicklungen 10 auf, die dem Lüfterrad 8 frei, d. h. ohne ein dazwischen befindliches Hindernis, gegenüberliegen. Hierdurch kann die Kühlluft 71 direkt mit einem Wicklungsende 11 der Statorwicklung 10 in Berührung gelangen. Das Motorgehäuse 4 weist Austrittsöffnungen 13 für die Kühlluft 71 auf, welche eine Länge L1 aufweisen, die in etwa der axialen Länge L2 des Lüfterrads 8 entspricht. Die Dicke des Lüfterrads 8 beträgt 30 % des Durchmessers D3 der Motorwelle 20 und bewirkt eine gute Wärmeabfuhr von der Motorwelle 20 weg und hin zu radial außen liegenden Bereichen des Lüfterrades 8. Der Durchmesser D5 des Kühlrads 64 entspricht im Wesentlichen dem Durchmesser der Statorwicklungen 10 in einer Ebene senkrecht zur Motordrehachse 5. Mit Hilfe des Lüfterrads 8 wird insbesondere Kühlluft von innen aus dem Motorgehäuse nach außen gefördert.

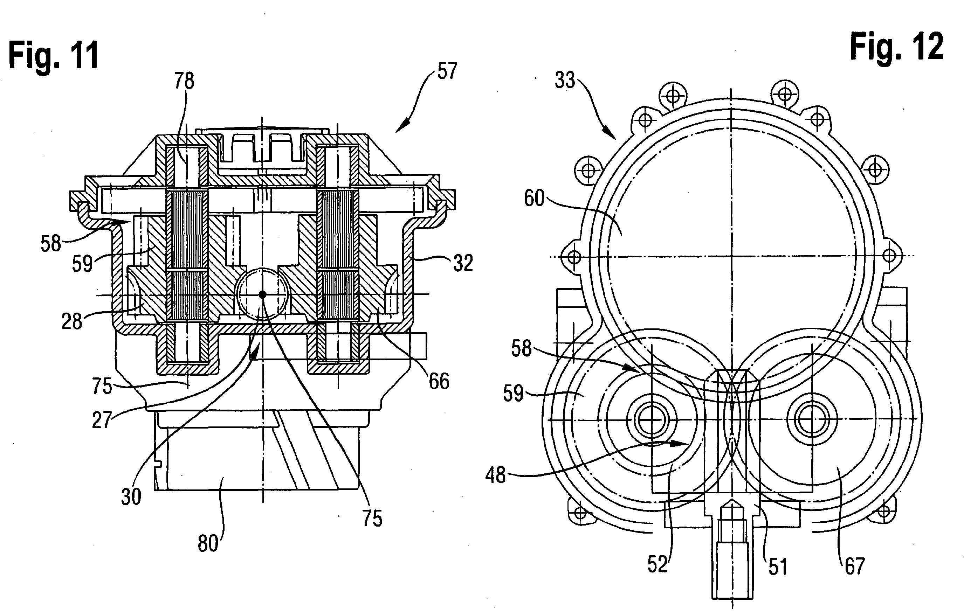

Fig. 11 zeigt eine drehungsübertragende Verbindung 57 mit einem Stirnradgetriebe 58 und einem Schneckengetriebe 30 im Querschnitt entlang einer vertikalen Schnittebene senkrecht zur Motordrehachse 5. Eine Getriebeschnecke 27 greift in ein Schneckenrad 28, welches über eine Getriebewelle 75 mit einem ersten Stirnrad 59 drehfest verbunden ist, welches seinerseits in ein zweites Stirnrad 60 (nicht gezeigt) eingreift. Ein Schneckengegenrad 66 nimmt Gegenkräfte auf, so dass die Getriebeschnecke 27 nicht nach rechts ausbrechen kann. An einem Gerätekopf 80 kann ein Rührbesen 74 (siehe Fig. 1) gesetzt werden.

Fig. 12 zeigt eine weitere Ausführungsform der Getriebestufe 33 mit einem Stirnradgetriebe 58 und einem Stirnschraubradgetriebe 48, wobei ein erstes Stirnschraubrad 28 mit einem zweiten Stirnschraubrad 52 in Eingriff gelangt, welches drehfest verbunden mit einem ersten Stirnrad 59 ist, dass in Eingriff mit einem zweiten Stirnrad 60 steht. In Bezug auf das erste Stirnschraubrad 51 gegenüberliegend zu dem zweiten Stirnschraubrad 52 ist ein Stirnschraubgegenrad 67 angeordnet, um Gegenkräfte aufnehmen zu können.

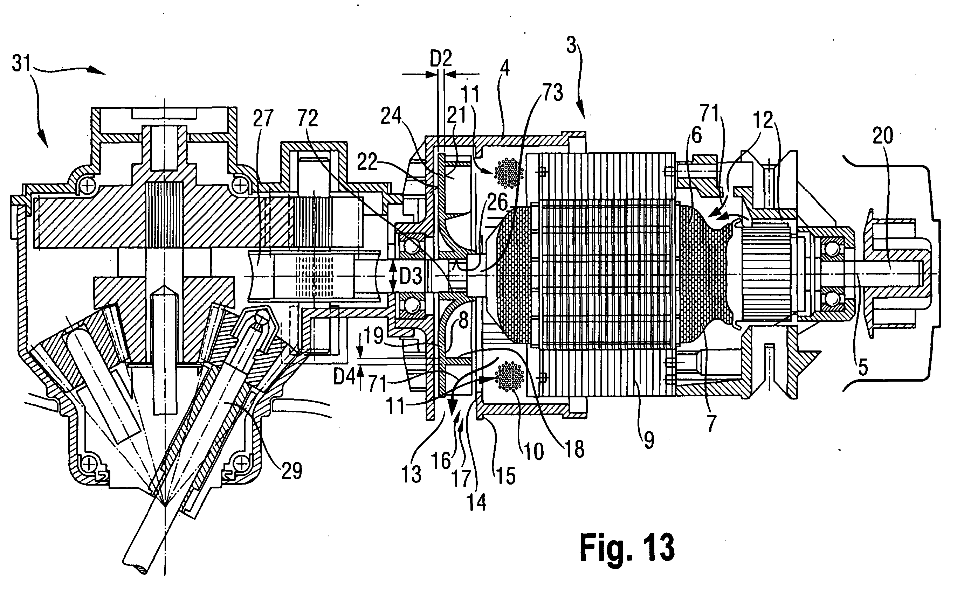

Fig. 13 zeigt eine weitere Ausführungsform der Elektromotor-Getriebestufen-Anordnung 31 im Längsschnitt mit einer vertikalen Schnittebene, wobei auf der Motorwelle 20 ein Kühlrad 24 befestigt ist, welches mit einer gut wärmeleitenden Kontaktfläche 26 mit der Motorwelle 20 verbunden ist, um einen Wärmeübergangswiderstand 72 möglichst klein zu gestalten. Wärme, die an der Getriebeschnecke 27 oder in den Rotorwicklungen 7 des Rotors 6 gebildet wird, wird in der Motorwelle 20, welche einen möglichst geringen Wärmeleitungswiderstand 73 aufweist, über die Kontaktflächen 26 an das Kühlrad 24 geleitet, welches die Wärme aufgrund seiner großen Wandstärke D2 gut aufnehmen und in radial außen liegende Bereiche des Kühlrads 24 effizient befördern kann. Das Kühlrad 24 weist darüber hinaus Ventilatorflügel 18 auf, welche bei der Drehung der Motorwelle 20 einen Kühlluftstrom 71 generieren. Der Kühlluftstrom 71 kühlt einerseits das Kühlrad 24 und hilft somit die über Wärmeleitung transportierte Wärme abzuführen. Weiterhin erzeugt das Kühlrad 24 Kühlluft 71, die direkt an einem Wicklungsende 11 einer Statorwicklung 10 des Stators 9 vorbeistreicht und somit auch den Stator 9 kühlt. Das Motorgehäuse 4 weist Eintrittsöffnungen 12 für Kühlluft 71 wie auch Austrittsöffnungen 13 auf. Die Austrittsöffnungen weisen einen ersten 14 und einen zweiten 15 Rand auf, die jeweils auskragend nach innen bzw. außen gestaltet sind, wodurch ein erster Strömungskanal 16 und ein zweiter Strömungskanal 17 erzeugt wird, welche eine Beschleunigung der Kühlluft 71 unterstützen und somit die Kühlung des Elektromotors 3 positiv beeinflussen. Das Kühlrad 24 ist als Lüfterrad 8 ausgestaltet, indem die Ventilatorflügel 18 auf einer Trägerscheibe 19 aufgebracht sind. Das Lüfterrad 8 ist durch Spritzguss hergestellt. Die Wandstärke D4 der Ventilatorflügel 18 beträgt in etwa 20 % des Durchmessers D3 der Motorwelle 20. Die Kontaktfläche 26 entspricht in etwa der Querschnittsfläche der Motorwelle 20. Durch eine derartige Dimensionierung des Lüfterrads 8 wird eine gute Wärmeabfuhr der in der Getriebeschnecke 27 bzw. in den Rotorwicklungen 7 erzeugten Wärme bewirkt. Die Wärme wird über das Lüfterrad 8 abgeführt, so dass insgesamt eine besonders zügige und effiziente Wärmeabfuhr selbst bei starker Belastung des Küchengeräts 1 erzielt wird.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:
Ein besonders vorteilhafter Elektromotor 3 für ein elektromotorisches Küchengerät 1, insbesondere für eine elektromotorische Solo- oder Universalküchenmaschine, umfassend ein Motorgehäuse 4, in dem ein entlang einer Motordrehachse 5 drehbeweglicher Rotor 6 mit einem damit drehfest verbundenen Lüfterrad 8 angeordnet ist sowie ein Stator 9 mit einer Statorwicklung 10 , wobei die Statorwicklung 10 ein Wicklungsende 11 aufweist, welches sich parallel zu einer Richtung der Motordrehachse 5 zum Lüfterrad 8 hin erstreckt, ist dadurch gekennzeichnet, dass das Wicklungsende 11 und das Lüfterrad 8 sich frei gegenüberliegen. In einer Ausgestaltung ist der Elektromotor 3 ein Wechselstrommotor. In einer weiteren Ausgestaltung ist der Elektromotor 3 ein Kondensatormotor. In einer noch weiteren Ausgestaltung ist der Elektromotor 3 ein Spaltpolmotor. In einer Ausgestaltung weist das Motorgehäuse 4 Eintrittsöffnungen 12 und Austrittsöffnungen 13 für von dem Lüfterrad 8 geförderte Kühlluft 71 auf, und die Länge L1 der Austrittsöffnungen 13 entlang der Richtung der Motordrehachse 5 entspricht im Wesentlichen der axialen Länge L2 des Lüfterrads 8. In einer weiteren Ausgestaltung weist das Motorgehäuse 4 Austrittsöffnungen 13 für von dem Lüfterrad 8 geförderte Kühlluft 71 auf, die einen nach innen in das Motorgehäuse 4 auskragenden ersten Rand 14 aufweisen, der als erster Strömungskanal 16 zur Beschleunigung der Kühlluft 71 dient. Weiterhin kann das Motorgehäuse 4 Austrittsöffnungen 13 für von dem Lüfterrad 8 geförderte Kühlluft 71 aufweisen, die einen nach außen auskragenden zweiten Rand 15 aufweisen, der als zweiter Strömungskanal 17 zur Beschleunigung der Kühlluft 71 dient. In einer Weiterbildung umfasst das Lüfterrad 8 Ventilatorflügel 18 und weist eine senkrecht zur Motordrehachse 5 angeordnete Trägerscheibe 19 mit einer ersten 21 und einer zweiten 22 Scheibenfläche auf, wobei die Ventilatorflügel 18 an der Trägerscheibe 19 befestigt sind. In einer weiteren Weiterbildung sind die Ventilatorflügel 18 gemeinsam auf der ersten Scheibenfläche 21 angeordnet, insbesondere gut wärmeleitend angeordnet, die insbesondere zur Statorwicklung 10 hin weist. In einer speziellen Ausführungsform liegt die maximale nominale Drehfrequenz des Elektromotors 3 in einem Bereich von 8000 bis 20000 Umdrehungen pro Minute, insbesondere in einem Bereich von 10000 und 15000 Umdrehungen pro Minute. Die maximale aufnehmbare elektrischen Nennleistung des Elektromotors 3 kann in einem Bereich von 200 W bis 1200 W, insbesondere in einem Bereich von 600 W bis 900 W, liegen.

Ein besonders vorteilhaftes elektromotorisches Küchengerät 1, insbesondere elektromotorische Solo- oder Universalküchenmaschine, umfasst den erfindungsgemäßen Elektromotor 3.

Ein besonders vorteilhaftes elektromotorisches Küchengerät 1, insbesondere elektromotorische Solo- oder Universalküchenmaschine, mit einem Elektromotor 3, der einen Stator 9 und einen darin auf einer Motorwelle 20 drehbeweglichen Rotor 6 aufweist, wobei der Rotor 6 Rotorwicklungen 7 umfasst und die Motorwelle 20 ein Getriebeelement 23, insbesondere eine Getriebeschnecke 27 oder ein erstes Stirnschraubrad 51, aufnimmt, ist dadurch gekennzeichnet, dass ein mit der Motorwelle 20 drehfest verbundenes metallisches Kühlrad 24 zum Kühlen der Rotorwicklungen 7 und/oder zum Kühlen des Getriebeelements 23 vorgesehen ist. Vorteilhafterweise sind das Kühlrad 24 und der Rotor 6 über die Motorwelle 20 derart wärmeleitend verbunden, dass im Betrieb bei nominaler Maximalleistung des Elektromotors 3 mindestens 20 %, insbesondere mindestens 30%, vorzugsweise mindestens 40%, der von den Rotorwicklungen 7 erzeugten Wärme über Wärmeleitung an das Kühlrad 24 abgeleitet wird. Insbesondere sind das Kühlrad 24 und das Getriebeelement 23 derart wärmeleitend verbunden, dass im Betrieb bei nominaler Maximalleistung des Elektromotors 3 mindestens 60 %, insbesondere mindestens 75 %, vorzugsweise mindestens 90%, der an dem Getriebeelement 23 eingeführten Wärmeleistung über Wärmeleitung an das Kühlrad 24 abgeführt wird. In einer Ausgestaltung liegt eine Wandstärke D2 der Kühlrads 24 mindestens 20 %, insbesondere mindestens 25 %, vorzugsweise mindestens 30%, des Durchmessers D3 der Motorwelle 20 beträgt und insbesondere in einem Bereich von 1,5 mm bis 5 mm. In einer Weiterbildung ist die Summe der Wärmeübergangswiderstände 72 entlang der Wärmeleitungsstrecke 25 Rotorwicklung-Rotor-Motorwelle-Kühlrad 24 kleiner als die Summe der Wärmeleitungswiderstände 73 zwischen den Rotorwicklungen 7 und dem Kühlrad 24, insbesondere kleiner als 50%, vorzugsweise kleiner als 30%, besonders bevorzugt kleiner als 10 %. Das Kühlrad 24 und die Motorwelle 20 können an einer Kontaktfläche 26 verbunden sein, die mindestens 40 %, insbesondere mindestens 50%, vorzugsweise mindestens 60%, der Außenumfangfläche eines Hohlzylinders mit einem Durchmesser gleich dem Durchmesser D3 der Motorwelle 20 und einer Länge gleich dem Durchmesser D3 der Motorwelle 20 beträgt. Vorteilhafterweise ist das Kühlrad 24 entlang der Motorwelle 20 zwischen den Rotorwicklungen 7 und dem Getriebeelement 23 angeordnet. Das Getriebeelement 23 kann eine Getriebeschnecke 27 sein. In einer Ausgestaltung kann das Kühlrad 24 als Lüfterrad 8 ausgestaltet sein und kann insbesondere Ventilatorflügel 18 umfassen, deren Wandstärken D4 vorzugsweise mindestens 15 %, besonders bevorzugt mindestens 20%, des Durchmessers D3 der Motorwelle 20 betragen. Vorteilhafterweise weist das Kühlrad 24 eine senkrecht zur Motordrehachse 5 angeordnete Trägerscheibe 19 mit einer ersten 21 und einer zweiten 22 Scheibenfläche auf, wobei die Ventilatorflügel 18 an der Trägerscheibe 19 befestigt sind und insbesondere die Dicke D1 der Trägerscheibe 19 mindestens 20%, vorzugsweise mindestens 30%, des Durchmessers D3 der Motorwelle 20 beträgt. Vorteilhafterweise entspricht der Durchmesser D5 des Kühlrads 24 im Wesentlichen dem des Stators 9. In einer speziellen Ausgestaltung besteht das Kühlrad 24 aus Aluminium oder einer Aluminium-Zink Legierung. Das Kühlrad 24 kann durch Gießen oder Schmieden hergestellt sein. In einer Ausgestaltung kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, in das Küchengerät 1 einsetzbar sein.

Eine besonders vorteilhafte Anordnung eines Schneckengetriebes 30 umfasst ein Schneckenrad 28, eine Getriebeschnecke 27, eine Motorwelle 20 und ein Kühlrad 24, wobei das Schneckenrad 28 mit der an der Motorwelle 20 drehfest verbundenen Getriebeschnecke 27 in Eingriff gelangt und das Kühlrad 24 an und mit der Motorwelle 20 drehfest verbunden ist, und ist dadurch gekennzeichnet, dass das Kühlrad 24 metallisch ist und dass im Betrieb bei nominaler Maximalleistung mindestens 60 %, insbesondere mindestens 75 %, vorzugsweise mindestens 90%, der an dem Schneckengetriebe 30 erzeugten Wärmeleistung an das Kühlrad 24 über Wärmeleitung abgeführt wird. Das Kühlrad 24 kann ein Lüfterrad 8 sein.

Ein besonders vorteilhaftes elektromotorisches Küchengerät 1, insbesondere elektromotorische Solo- oder Universalküchenmaschine, umfassend eine einsetzbare Elektromotor-Getriebestufen-Anordnung 31, die einen ein Motorgehäuse 4 aufweisenden Elektromotor 3 und eine damit befestigte, ein Getriebegehäuse 32 aufweisende Getriebestufe 33 aufweist, ist dadurch gekennzeichnet, dass die Anordnung 31 einen aufsetzbaren Verstärkungsrahmen 37 aufweist, der um das Motorgehäuse 4 und das Getriebegehäuse 32 herum verläuft. In einer Ausgestaltung stellt der Verstärkungsrahmen 37 eine im Wesentlichen torsionssteife Verbindung entlang der Verbindungslinie 38 zwischen dem Elektromotor 3 und der Getriebestufe 33 her, wobei die torsionssteife Verbindung insbesondere Drehmomente in einem Bereich von 3 Nm bis 100 Nm, vorzugsweise in einem Bereich von 5 Nm bis 50 Nm, besonders bevorzugt ein einem Bereich von 10 Nm bis 20 Nm, aufnehmen kann. Der Verstärkungsrahmen 37 kann aus einem Metall, insbesondere durch Stanzen und Pressen oder durch Spritzguss, hergestellt sein. Der Verstärkungsrahmen 37 kann mit Hilfe von weniger als zehn Schrauben 39, insbesondere mit weniger als sechs Schrauben, vorzugsweise mit nur einer Schraube, an dem Getriebegehäuse 32 und/oder an dem Motorgehäuse 4 verschraubt sein. Vorteilhafterweise umfasst das Getriebegehäuse 32 und das Motorgehäuse 4 bzw. der Verstärkungsrahmen 37 Verbindungselemente D1, insbesondere Verbindungsvorsprünge 41, vorzugsweise eine umlaufende Feder, und Verbindungsgegenelemente 42, insbesondere Verbindungsaufnahmen 43, vorzugsweise eine umlaufende Nut, mit denen eine gewindefreie Befestigung des Verstärkungsrahmen 37 an dem Getriebegehäuse 32 bzw. an dem Motorgehäuse 4 bewirkt wird. Der Verstärkungsrahmen 37 kann ein U-förmiges oder L-förmiges Profil 44 aufweisen. Vorteilhafterweise kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, mit dem Küchengerät 1 verbunden werden. Das Motorgehäuse 4 und/oder das Getriebegehäuse 32 kann auch aus Kunststoff, insbesondere aus glasfaserverstärktem Kunststoff, hergestellt sein. Das Getriebegehäuse 32 und das Motorgehäuse 4 kann mit Hilfe eines Schraubflansches 45, insbesondere mit Hilfe eines Bajonettverschlusses 34, miteinander verbunden sein.

Ein besonders vorteilhaftes Verfahren zum Herstellen eines Küchengeräts 1, insbesondere eines erfindungsgemäßen Küchengeräts 1, welches ein Gerätegehäuse, einen ein Motorgehäuse 4 aufweisenden Elektromotor 3 und eine ein Getriebegehäuse 32 aufweisende Getriebestufe 33 aufweist, sieht vor, dass zur Vormontage das Motorgehäuse 4 mit dem Getriebegehäuse 32 unter Ausbildung einer Elektromotor-Getriebestufen-Anordnung 31 derart verbunden wird, dass eine Motorwelle 20 des Elektromotors 3 mit einer Getriebewelle der Getriebestufe 33 drehfest verkoppelt wird, und um das Getriebegehäuse 32 und das Motorgehäuse 4 ein Verstärkungsrahmen 37 herumgelegt wird, so dass das Getriebegehäuse 32 torsionssteif mit dem Motorgehäuse 4 verbunden ist; und dass anschließend die vormontierte Elektromotor-Getriebestufen-Anordnung 31 in das Gerätegehäuse 2 eingebaut wird. Der Verstärkungsrahmen 37 kann mit weniger als zehn Schrauben 39, insbesondere weniger als sechs Schrauben, vorzugsweise mit nur einer Schraube, an dem Motorgehäuse 4 und/oder Getriebegehäuse 32 befestigt sein. Vorteilhafterweise wird der Verstärkungsrahmen 37 mit dem Motorgehäuse 4 und/oder mit dem Getriebegehäuse 32 verklipst. Vorteilhafterweise wird die Elektromotor-Getriebestufen-Anordnung 31 vor dem Einbau in das Gerätegehäuse 2 getestet bzw. spezifiziert.

Ein besonders vorteilhaftes elektromotorisches Küchengerät 1, insbesondere elektromotorische Solo- oder Universalküchenmaschine, mit einem Elektromotor 3 und einer Getriebestufe 33, wobei der Elektromotor 3 ein Motorgehäuse 4 und die Getriebestufe 33 ein Getriebegehäuse 32 aufweist, ist dadurch gekennzeichnet, dass das Motorgehäuse 4 und das Getriebegehäuse 32 mit Hilfe eines Bajonettverschlusses 34 miteinander verbunden sind. Das Motorgehäuse 4 kann aus glasfaserverstärktem Kunststoff oder Spritzguss sein. Das Getriebegehäuse 32 kann auch aus glasfaserverstärktem Kunststoff oder Spritzguss sein. Der Bajonettverschluss 34 weist insbesondere einen Verschlusswinkel 46 von weniger als 180 °, insbesondere von weniger als 90°, vorzugsweise von weniger als 45 °, auf. In einer Ausgestaltung weist der Elektromotor 3 eine einzige Drehrichtung 47 auf, die in Schließrichtung des Bajonettverschlusses 34 wirkt und ein Selbstfestziehen des Bajonettverschlusses 34 im Betrieb bewirkt. Vorteilhafterweise wird eine drehfeste Verbindung einer Motorwelle 20 des Elektromotors 3 mit einer Getriebewelle 75 der Getriebestufe 33 mit Hilfe eines Schneckengetriebes 30 hergestellt. Das Schneckengetriebe 30 kann eine motorseitige Getriebeschnecke 27 und mindestens ein getriebeseitiges Schneckenrad 28, vorzugsweise zwei zur Getriebeschnecke 27 gegenüberliegende, getriebeseitige Schneckenräder, umfassen. Vorteilhafterweise werden das Motorgehäuse 4 und das Getriebegehäuse 32 zusätzlich durch einen Verstärkungsrahmen 37 miteinander fixiert. In einer Ausgestaltung weist der Bajonettverschluss 34 eine Verschlussdrehachse auf, die im Wesentlichen mit einer Motordrehachse 5 zusammenfällt. Vorteilhafterweise weist das Küchengerät 1 ein Gerätegehäuse 2 auf, in welches der mit der Getriebestufe 33 verbundene Elektromotor 3 einsetzbar ist.

Ein besonders vorteilhafter Elektromotor weist ein erstes Bajonettverschlussteil 35 für das erfindungsgemäße Küchengerät 1 auf.

Eine besonders vorteilhafte Getriebestufe 33 weist ein zweites Bajonettverschlussteil 36 für ein Küchengerät 1 auf.

Ein besonders vorteilhaftes Verfahren zum Montieren eines elektromotorischen Küchengeräts 1, insbesondere des erfindungsgemäßen Küchengeräts 1, mit einem Elektromotor 3 und einer Getriebestufe 33, wobei der Elektromotor 3 ein Motorgehäuse 4 und die Getriebestufe 33 ein Getriebegehäuse 32 aufweist, ist gekennzeichnet durch folgende Verfahrensschritte: Vormontieren des Elektromotors 3 in dem Motorgehäuse 4, Vormontieren der Getriebestufe 33 in dem Getriebegehäuse 32, Verbinden des Motorgehäuses 4 und des Getriebegehäuses 32 mit Hilfe eines Bajonettverschlusses 34, derart, dass eine Motorwelle 20 des Elektromotors 3 mit einer Getriebewelle 75 drehfest verbunden werden. Vorteilhafterweise erfolgt die Dreh-Streckbewegung des Verschließens des Bajonettverschlusses 34 im Wesentlichen um die Motorwelle 20 herum.

Ein besonders vorteilhaftes elektromotorisches Küchengerät 1, insbesondere elektromotorische Solo- oder Universalküchenmaschine, umfassend ein Planetengetriebe 54, welches mindestens ein Planetenrad 55 mit einer Planetenradachse 56 und ein Sonnenrad 49 mit einer Sonnenradachse 50, und einen Elektromotor 3 mit einer Motorwelle 20, die sich entlang einer Motordrehachse 5 erstreckt, aufweist, wobei die Motorwelle 20 und das Planetengetriebe 54 mit einer drehungsübertragenden Verbindung 57 miteinander gekoppelt sind, ist dadurch gekennzeichnet, dass die drehungsübertragende Verbindung 57 ein Stirnradgetriebe 58 mit einem ersten 59 und ein zweiten 60 Stirnrad und/oder ein Kegelradgetriebe 65 mit einem ersten 63 und einem zweiten 64 Kegelrad umfasst. In einer Ausgestaltung weist das Stirnradgetriebe 58 bzw. das Kegelradgetriebe 65 ein Übersetzungsverhältnis in einem Bereich von 10 bis 40, insbesondere in einem Bereich von 20 bis 30, auf. In einer Weiterbildung umfasst die drehungsübertragende Verbindung 57 ein Schneckengetriebe 30 mit einer Getriebeschnecke 27 und einem Schneckenrad 28 oder ein Stirnschraubradgetriebe 48 mit einem ersten 51 und einem zweiten 52 Stirnschraubrad, wobei das Schneckengetriebe 30 bzw. das Stirnschraubradgetriebe 48 ein Übersetzungsverhältnis in einem Bereich von 0,5 bis 4, insbesondere in einem Bereich von 1 bis 2, aufweist. Die Getriebeschnecke 27 bzw. das erste Stirnschraubrad 51 kann auf der Motorwelle 20 sitzen. Das Sonnenrad 49 kann eine Sonnenradwelle 53 aufweisen, auf der ein zweites Kegelrad sitzt. In einer Ausgestaltung stehen die jeweiligen Getriebewellen 75 des Schneckengetriebes 30, die jeweiligen Getriebewellen 76 des Stirnschraubradgetriebes 48 bzw. die jeweiligen Getriebewellen 77 des Kegelradgetriebes 65 im Wesentlichen senkrecht aufeinander bzw. die jeweiligen Getriebewellen 78 des Stirnradgetriebes 58 im Wesentlichen parallel zueinander. Die Sonnenradachse 50 kann im Wesentlichen senkrecht auf der Rotordrehachse 5 stehen und mit dieser koplanar sein. In einer Weiterbildung weist zur Aufnahme von Gegenkräften das Schneckengetriebe 30 ein Schneckengegenrad 66, das Stirnschraubradgetriebe 48 ein Stirnschraubgegenrad 67, bzw. das Kegelradgetriebe 65 ein Kegelgegenrad 68 auf, welches in Bezug auf die Getriebeschnecke 27, das erste Stirnschraubrad 51, bzw. das erste Kegelrad 63 jeweils dem Schneckenrad 28, dem zweiten Stirnschraubrad 52 bzw. dem zweiten Kegelrad 64 gegenüberliegt und mit der Getriebeschnecke 27, dem ersten Stirnschraubrad 51 bzw. dem ersten Kegelrad 63 in Eingriff gelangt. Das Planetengetriebe 54 kann ein zu dem Sonnenrad 49 koaxial angeordnetes Hohlrad 69 aufweisen. Das Hohlrad 69 kann stationär sein und mit einem Gerätegehäuse 2 des Küchengeräts 1 drehfest verbunden sein. Das Hohlrad 69 kann kegelförmig sein. Die Planetenräder 55 können kegelförmig sein. In einer Ausgestaltung schneiden sich die Planetenradachse 56 und die Sonnenradachse 50 unter einem Winkel in einem Bereich von 30° bis 80°, insbesondere in einem Bereich von 20° bis 35°, vorzugsweise in einem Bereich von 25° bis 30°, schneiden. Vorteilhafterweise sind mindestens zwei, insbesondere mindestens drei, Planetenräder 55 vorgesehen. Vorteilhafterweise weist das Planetenrad 55 eine Planetenradachse 56 auf und das Übersetzungsverhältnis zwischen einer Drehung um die Sonnenradachse 50 und einer Drehung um die Planetenradachse 56 liegt in einem Bereich von 1:1 bis 1:10, insbesondere in einem Bereich von 1:2 bis 1:5. Der Elektromotor 3 kann eine maximale nominelle Umlauffrequenz in einem Bereich von 8000 Umdrehungen pro Minute bis 20000 Umdrehungen pro Minute, insbesondere in einem Bereich von 10000 Umdrehungen pro Minute bis 15000 Umdrehungen pro Minute, aufweisen. In einer besonderen Ausgestaltung weist das mindestens eine Planetenrad 55 eine Aufnahme 70 für ein Werkzeug 29, insbesondere ein Pürier-, Misch-, Häcksel-, Knet- und/oder Schneidwerk und/oder einen Schlag- bzw. Rührbesen 74, auf.

Die Erfindung betrifft ein elektromotorisches Küchengerät 1, insbesondere eine elektromotorische Solo- oder Universalküchenmaschine, mit einem Elektromotor 3 und einer Getriebestufe 33, wobei der Elektromotor 3 ein Motorgehäuse 4 und die Getriebestufe 33 ein Getriebegehäuse 32 aufweist, wobei das Motorgehäuse 4 und das Getriebegehäuse 32 mit Hilfe eines Bajonettverschlusses 34 miteinander verbunden sind; ein Elektromotor 3 sowie eine Getriebestufe 3 mit entsprechenden Bajonettverschlussteilen, die geeignet und bestimmt für das erfindungsgemäße Küchengerät sind; und ein Verfahren zum Montieren eines elektromotorischen Küchengeräts. Die Erfindung zeichnet sich durch eine vereinfachte Montage bzw. Herstellung des Küchengeräts aus, welche eine Qualitätskontrolle vor dem vollständigen Zusammensetzen des Küchengeräts ermöglicht und somit die Komplexität und Kosten der Herstellung erheblich vereinfacht.

### Bezugszeichenliste

- 1: Küchengerät
- 2: Gerätegehäuse
- 3: Elektromotor
- 4: Motorgehäuse
- 5: Motordrehachse
- 6: Rotor
- 7: Rotorwicklungen
- 8: Lüfterrad
- 9: Stator
- 10: Statorwicklung
- 11: Wicklungsende
- 12: Eintrittsöffnungen
- 13: Austrittsöffnungen
- 14: erster Rand
- 15: zweiter Rand
- 16: erster Strömungskanal
- 17: zweiter Strömungskanal
- 18: Ventilatorflügel
- 19: Trägerscheibe
- 20: Motorwelle
- 21: erste Scheibenfläche
- 22: zweite Scheibenfläche
- 23: Getriebeelement
- 24: Kühlrad
- 25: Wärmeleitungsstrecke
- 26: Kontaktfläche
- 27: Getriebeschnecke
- 28: Schneckenrad
- 29: Werkzeug
- 30: Schneckengetriebe
- 31: Elektromotor-Getriebestufen-Anordnung
- 32: Getriebegehäuse
- 33: Getriebestufe
- 34: Bajonettverschluss
- 35: erstes Bajonettverschlussteil
- 36: zweites Bajonettverschlussteil
- 37: Verstärkungsrahmen
- 38: Verbindungslinie
- 39: Schrauben
- 40: Verbindungselemente
- 41: Verbindungsvorsprünge
- 42: Verbindungsgegenelemente
- 43: Verbindungsaufnahmen
- 44: Profil
- 45: Schraubflansch
- 46: Verschlusswinkel
- 47: Drehrichtung
- 48: Stirnschraubradgetriebe
- 49: Sonnenrad
- 50: Sonnenradachse
- 51: erstes Stirnschraubrad
- 52: zweites Stirnschraubrad
- 53: Sonnenradwelle
- 54: Planetengetriebe
- 55: Planetenrad
- 56: Planetenradachse
- 57: drehungsübertragende Verbindung
- 58: Stirnradgetriebe
- 59: erstes Stirnrad
- 60: zweites Stirnrad
- 61: erste Stirnradwelle
- 62: zweite Stirnradwelle
- 63: erstes Kegelrad
- 64: zweites Kegelrad
- 65: Kegelradgetriebe
- 66: Schneckengegenrad
- 67: Stirnschraubgegenrad
- 68: Kegelgegenrad
- 69: Hohlrad
- 70: Aufnahme
- 71: Kühlluft
- 72: Wärmeübergangswiderstand
- 73: Wärmeleitungswiderstände
- 74: Rührbesen
- 75: Getriebewellen des Schneckengetriebes 30
- 76: Getriebewellen des Stirnschraubradgetriebes 48
- 77: Getriebewellen des Kegelradgetriebes 65
- 78: Getriebewellen des Stirnradgetriebes 58
- 79: Gehäusedeckel
- 80: Gerätekopf
- 81: Werkzeugarretierung

- L1: Länge der Austrittsöffnungen 13
- L2: Länge des Lüfterrads 8
- L3,L4: Längen
- D1: Dicke der Trägerscheibe 19
- D2: Wandstärke des Kühlrads 24
- D3: Durchmesser der Motorwelle 20
- D4: Wandstärke der Ventilatorflügel 18
- D5: Durchmesser des Kühlrads 24
- W1: Winkel

## Patentansprüche

1. Elektromotorisches Küchengerät (1), insbesondere elektromotorische Solo- oder Universalküchenmaschine, mit einem Elektromotor (3) und einer Getriebestufe (33), wobei der Elektromotor (3) ein Motorgehäuse (4) und die Getriebestufe (33) ein Getriebegehäuse (32) aufweist, **dadurch gekennzeichnet, dass** das Motorgehäuse (4) und das Getriebegehäuse (32) mit Hilfe eines Bajonettverschlusses (34) miteinander verbunden sind.

2. Küchengerät (1) nach Anspruch 1, **dadurch gekennzeichnet, dass** das Motorgehäuse (4) aus glasfaserverstärktem Kunststoff oder Spritzguss ist.

3. Küchengerät (1) nach einem der vorherigen Ansprüche, **dadurch gekennzeichnet, dass** das Getriebegehäuse (32) aus glasfaserverstärktem Kunststoff oder Spritzguss ist.

4. Küchengerät (1) nach einem der vorherigen Ansprüche, **dadurch gekennzeichnet, dass** der Bajonettverschluss (34) einen Verschlusswinkel (46) von weniger als 180 °, insbesondere von weniger als 90°, vorzugsweise von weniger als 45 °, aufweist.

5. Küchengerät (1) nach einem der vorherigen Ansprüche, **dadurch gekennzeichnet, dass** der Elektromotor (3) eine einzige Drehrichtung (47) aufweist, die in Schließrichtung des Bajonettverschlusses (34) wirkt und ein Selbstfestziehen des Bajonettverschlusses (34) im Betrieb bewirkt.

6. Küchengerät (1) nach einem der vorherigen Ansprüche, **dadurch gekennzeichnet, dass** eine drehfeste Verbindung einer Motorwelle (20) des Elektromotors (3) mit einer Getriebewelle (75) der Getriebestufe (33) mit Hilfe eines Schneckengetriebes (30) hergestellt wird.

7. Küchengerät (1) nach Anspruch 6, **dadurch gekennzeichnet, dass** das Schneckengetriebe (30) eine motorseitige Getriebeschnecke (27) und mindestens ein getriebeseitiges Schneckenrad (28), vorzugsweise zwei zur Getriebeschnecke (27) gegenüberliegende, getriebeseitige Schneckenräder, umfasst.

8. Küchengerät (1) nach einem der vorherigen Ansprüche, **dadurch gekennzeichnet, dass** das Motorgehäuse (4) und das Getriebegehäuse (32) zusätzlich durch einen Verstärkungsrahmen (37) miteinander fixiert werden.

9. Küchengerät (1) nach einem der vorherigen Ansprüche, **dadurch gekennzeichnet, dass** der Bajonettverschluss (34) eine Verschlussdrehachse aufweist, die im Wesentlichen mit einer Motordrehachse (5) zusammenfällt.

10. Küchengerät (1) nach einem der vorherigen Ansprüche, **dadurch gekennzeichnet, dass** das Küchengerät (1) ein Gerätegehäuse (2) aufweist, in welches der mit der Getriebestufe (33) verbundene Elektromotor (3) einsetzbar ist.

11. Elektromotor (3) mit einem ein erstes Bajonettverschlussteil (35) aufweisenden Motorgehäuse (4) für ein Küchengerät (1) nach einem der Ansprüche 1 bis 10.

12. Getriebestufe (33) mit einem ein zweites Bajonettverschlussteil (36) aufweisenden Getriebegehäuse (32) für ein Küchengerät (1) nach einem der Ansprüche 1 bis 10.

13. Verfahren zum Montieren eines elektromotorischen Küchengeräts (1), insbesondere eines Küchengeräts (1) nach einem der Ansprüche 1 bis 9, mit einem Elektromotor (3) und einer Getriebestufe (33), wobei der Elektromotor (3) ein Motorgehäuse (4) und die Getriebestufe (33) ein Getriebegehäuse (32) aufweist, **gekennzeichnet durch** folgende Verfahrensschritte:
Vormontieren des Elektromotors (3) in dem Motorgehäuse (4),
Vormontieren der Getriebestufe (33) in dem Getriebegehäuse (32),
Verbinden des Motorgehäuses (4) und des Getriebegehäuses (32) mit Hilfe eines Bajonettverschlusses (34), derart, dass eine Motorwelle (20) des Elektromotors (3) mit einer Getriebewelle (75) drehfest verbunden werden.

14. Verfahren nach Anspruch 13, **dadurch gekennzeichnet, dass** die Dreh-Streckbewegung des Verschließens des Bajonettverschlusses (34) im Wesentlichen um die Motorwelle (20) erfolgt.

## Claims

1. Electric-motor-driven kitchen appliance (1), particularly electric-motor-driven solo or universal food processor, with an electric motor (3) and a transmission stage (33), wherein the electric motor (3) has a motor housing (4) and the transmission stage (33) has a transmission housing (32), **characterised in that** the motor housing (4) and the transmission housing (32) are connected together with the help of a bayonet coupling (34).

2. Kitchen appliance (1) according to claim 1, **characterised in that** the motor housing (4) is of glass-fibre-reinforced synthetic material or an injection moulding.

3. Kitchen appliance (1) according to one of the preceding claims, **characterised in that** the transmission housing (32) is of glass-fibre-reinforced synthetic material or an injection moulding.

4. Kitchen appliance (1) according to any one of the preceding claims, **characterised in that** the bayonet coupling (34) has an interlocking angle (46) of less than 180°, particularly less than 90°, preferably less than 45°.

5. Kitchen appliance (1) according to any one of the preceding claims, **characterised in that** the electric motor (3) has a single direction (47) of rotation, which acts in the closing direction of the bayonet coupling (34) and in operation produces a self-tightening of the bayonet coupling (34).

6. Kitchen appliance (1) according to any one of the preceding claims, **characterised in that** a rotationally fast connection of a motor shaft (20) of the electric motor (3) with a transmission shaft (75) of the transmission stage (33) is produced with the help of a worm transmission (30).

7. Kitchen appliances (1) according to claim 6, **characterised in that** the worm transmission (30) comprises a gear worm (27) at the motor side and at least one worm wheel (28) at the transmission side, preferably two worm wheels at the transmission side and opposite with respect to the transmission worm (27).

8. Kitchen appliance (1) according to any one of the preceding claims,
**characterised in that** the motor housing (4) and the transmission housing (32) are additionally fixed to one another by a reinforcing frame (37).

9. Kitchen appliance (1) according to any one of the preceding claims, **characterised in that** the bayonet coupling (34) has an interlocking rotational axis substantially coinciding with a motor rotational axis (5).

10. Kitchen appliance (1) according to any one of the preceding claims, **characterised in that** the kitchen appliance (1) has a appliance housing (2) into which the electric motor (3) connected with the transmission stage (33) is insertable.

11. Electric motor (3) with a motor housing (4), which has a first bayonet coupling part (35), for a kitchen appliance (1) according to any one of claims 1 to 10.

12. Transmission stage (33) with a transmission housing (32), which has a second bayonet coupling part (36), for a kitchen appliance (1) according to any one of claims 10.

13. Method of assembling an electric-motor-driven kitchen appliance (1), particularly a kitchen appliance (1) according to any one of claims 1 to 9, with an electric motor (3) and a transmission stage (33), wherein the electric motor (3) has a motor housing (4) and the transmission stage (33) has a transmission housing (32), **characterised by** the following method steps:
premounting the electric motor (3) in the motor housing (4),
premounting the transmission stage (33) in the transmission housing (32) and
connecting the motor housing (4) and the transmission housing (32) with the help of a bayonet coupling (34) in such a manner that a motor shaft (20) of the electric motor (3) is connected with a transmission shaft (75) to be secure against relative rotation.

14. Method according to claim 13, **characterised in that** the twisting-drawing motion of interlocking the bayonet coupling (34) takes place substantially about the motor shaft (20).

## Revendications

1. Appareil de cuisine (1) à moteur électrique, en particulier machine de cuisine solo ou universelle à moteur électrique, comprenant un moteur électrique (3) et un étage d'engrenage (33), le moteur électrique (3) présentant un carter de moteur (4) et l'étage d'engrenage (33) un carter d'engrenage (32), **caractérisé en ce que** le carter de moteur (4) et le carter d'engrenage (32) sont reliés l'un à l'autre à l'aide d'une fermeture à baïonnette (34).

2. Appareil de cuisine (1) selon la revendication 1, **caractérisé en ce que** le carter de moteur (4) est à base de plastique renforcé de fibre de verre ou de fonte injectée.

3. Appareil de cuisine (1) selon l'une quelconque des revendications précédentes, **caractérisé en ce que** le carter d'engrenage (32) est à base de plastique renforcé de fibre de verre ou de fonte injectée.

4. Appareil de cuisine (1) selon l'une quelconque des revendications précédentes, **caractérisé en ce que** la fermeture à baïonnette (34) présente un angle de fermeture (46) de moins de 180°, en particulier de moins de 90°, de préférence de moins de 45°.

5. Appareil de cuisine (1) selon l'une quelconque des revendications précédentes, **caractérisé en ce que** le moteur électrique (3) présente un unique sens de rotation (47), qui agit dans le sens de fermeture de la fermeture à baïonnette (34) et entraîne un autoblocage de la fermeture à baïonnette (34) pendant le service.

6. Appareil de cuisine (1) selon l'une quelconque des revendications précédentes, **caractérisé en ce qu'**une liaison solidaire en rotation d'un arbre de moteur (20) du moteur électrique (3) avec un arbre d'engrenage (75) de l'étage d'engrenage (33) est établie à l'aide d'un engrenage à vis sans fin (30).

7. Appareil de cuisine (1) selon la revendication 6, **caractérisé en ce que** l'engrenage à vis sans fin (30) comprend une vis sans fin d'engrenage (27) côté moteur et au moins une roue à vis sans fin (28) côté engrenage, de préférence deux roues à vis sans fin côté engrenage faisant face à la vis sans fin d'engrenage (27).

8. Appareil de cuisine (1) selon l'une quelconque des revendications précédentes, **caractérisé en ce que** le carter de moteur (4) et le carter d'engrenage (32) sont fixés l'un à l'autre en supplément par un cadre de renfort (37).

9. Appareil de cuisine (1) selon l'une quelconque des revendications précédentes, **caractérisé en ce que** la fermeture à baïonnette (34) présente un axe de rotation de fermeture qui coïncide sensiblement avec un axe de rotation du moteur (5).

10. Appareil de cuisine (1) selon l'une quelconque des revendications précédentes, **caractérisé en ce que** l'appareil de cuisine (1) présente un carter d'appareil (2) dans lequel le moteur électrique (33) relié à l'étage d'engrenage (33) peut être inséré.

11. Moteur électrique (3) avec un carter de moteur (4) présentant une première partie de fermeture à baïonnette (35) pour un appareil de cuisine (1) selon l'une quelconque des revendications 1 à 10.

12. Etage d'engrenage (33) avec un carter d'engrenage (32) présentant une seconde partie de fermeture à baïonnette (36) pour un appareil de cuisine (1) selon l'une quelconque des revendications 1 à 10.

13. Procédé pour le montage d'un appareil de cuisine à moteur électrique (1), en particulier d'un appareil de cuisine (1) selon l'une quelconque des revendications 1 à 9, avec un moteur électrique (3) et un étage d'engrenage (33), le moteur électrique (3) présentant un carter de moteur (4) et l'étage d'engrenage (33) un carter d'engrenage (32), **caractérisé par** les étapes de procédé suivantes :
prémontage du moteur électrique (3) dans le carter de moteur (4),
prémontage de l'étage d'engrenage (33) dans le carter d'engrenage (32),
liaison du carter de moteur (4) et du carter d'engrenage (32) à l'aide d'une fermeture à baïonnette (34), de telle sorte qu'un arbre de moteur (20) du moteur électrique (3) est relié de façon solidaire en rotation à un arbre d'engrenage (75).

14. Procédé selon la revendication 13, **caractérisé en ce que** le sens de mouvement d'extension / rotation de la fermeture de l'emboîtement à baïonnette (34) s'effectue essentiellement autour de l'arbre de moteur (20).
